Europäisches Patentamt

European Patent Office

Office européen des brevets

(19)

(11) EP 0 873 574 B1

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(51) Int Cl.⁷: **H01J 37/30**

(21) Anmeldenummer: **97912175.3**

(22) Anmeldetag: **13.10.1997**

(86) Internationale Anmeldenummer:
**PCT/EP97/05632**

(87) Internationale Veröffentlichungsnummer:
**WO 98/16948 (23.04.1998 Gazette 1998/16)**

(54) **VERFAHREN ZUR BESTIMMUNG VON TIEFENPROFILEN IM DÜNNSCHICHTBEREICH**

METHOD TO DETERMINE DEPTH PROFILES IN AN AREA OF THIN COATING

PROCEDE DE DETERMINATION DE PROFILS DE PROFONDEUR DANS UNE ZONE A COUCHE MINCE

(84) Benannte Vertragsstaaten:
**AT BE CH DE DK ES FI FR GB GR IE IT LI LU MC NL PT SE**

(30) Priorität: **11.10.1996 DE 19641981**

(43) Veröffentlichungstag der Anmeldung:
**28.10.1998 Patentblatt 1998/44**

(73) Patentinhaber: **Benninghoven, Alfred**
**48161 Münster (DE)**

(72) Erfinder:
• **BENNINGHOVEN, Alfred**
**D-48161 Münster (DE)**

• **NIEHUIS, Ewald**
**D-48308 Senden (DE)**

(74) Vertreter: **Hoffmeister, Helmut, Dr. Dipl.-Phys. Patentanwalt**
**Goldstrasse 36**
**48147 Münster (DE)**

(56) Entgegenhaltungen:
**EP-A- 0 068 443        GB-A- 2 269 934**
**US-A- 4 368 099**

**Beschreibung**

Die Erfindung betrifft ein Verfahren bei dem eine Bestimmung von Tiefenprofilen im Dünnschichtbereich fester Substrate erfolgt, mit folgenden Verfahrensschritten:

- Erzeugen eines Ionenstrahls aus einer Ausgangssubstanz, die sich in der Gasphase befindet oder in die Dampfphase überführt wird;
- Lenken des Ionenstrahls auf die Substratoberfläche,
- definiertes Entfernen von Oberflächenschichten durch einen Ionenstrahl-Sputterprozeß mit diesen Ionenstrahl,
- Bestimmung der Konzentration der gesputterten, aus der Substratoberfläche entfernten Komponenten mittels einer Meßsonde mit einem nachgeschalteten Meß- und Auswertekreis.

Die Bestimmung von Tiefenprofilen ist eine wichtige, analytische Aufgabe sowohl für die Forschung und Entwicklung als auch für die Produkt- und Fertigungskontrolle im gesamten Bereich der Oberflächen- und Schichttechnologien. Es werden hierzu in der Größenordnung von einzelnen Atomschichten in z-Richtung Schichten abgetragen und die Konzentration im Strom der abgetragenen Teilchen oder jeweils freigelegten Oberflächenbereiche jeweils entsprechend dem Fortschreiten des Abtragens mit Hilfe von speziellen Sonden gemessen. Beispiele hierfür sind die Verteilung des Elementes Bor (B) in Silizium (Si) oder von Aluminium (Al) in Galliumarsenid (GaAs). Besondere Bedeutung besitzen solche Tiefenprofilanalysen im Bereich der Mikroelektronik. Es werden hier die Verteilung von Dotierungselementen, z.B. in Silizium-Einkristallen, oder die Zusammensetzung von Grenzflächen, z.B. in Galliumarsenid-Schichtsystemen gemessen, wobei eine hohe Tiefenauflösung und Empfindlichkeit Grundlage der Aufgabenstellung sind.

Das vorstehend genannte Verfahren ist eine Kombination des kontinuierlichen Abbaus der Oberfläche durch einen Ionenstrahl-Sputterprozess, d.h. eine Ionenbeschuß-Zerstäubung, zusammen mit einer möglichst empfindlichen und kontinuierlichen Bestimmung der jeweiligen Oberflächenkonzentration der interessierenden Komponenten. Die Oberfläche des zu analysierenden Festkörper-Substrates wird durch einen geeigneten Ionenstrahl möglichst gleichmäßig abgetragen. Die Geschwindigkeit des Abtragens kann empirisch bestimmt werden und hängt mit hoher Wiederholbarkeit ab von einer homogenen Stromdichte des Ionenstrahls, der Ionenart und -energie sowie vom Material selbst, wobei im Material vorhandene Einschlüsse diese Abtragungsgeschwindigkeit im allgemeinen praktisch nicht oder wenig beeinflussen.

Die Gleichmäßigkeit des Abtragens kann entweder durch eine homogene Stromdichte des Ionenstrahls auf der gesamten, abzutragenden Fläche oder durch Rasterung (Scannen) eines feingebündelten Ionenstrahls über die abzutragende Fläche erreicht werden. Mit einem derartigen gerasterten Primärionenstrahl wird eine Erosion an der Oberfläche durchgeführt. Im Innern des so gebildeten Kraters wird mit einem Sekundärionen-Massenspektrometer (SIMS) die jeweilige Oberflächenzusammensetzung kontinuierlich bestimmt. Dadurch ist es möglich, mit einer bekannten und vielfach praktizierten Kombination von Absputterung und SIMS-Analyse die Tiefenverteilung von Einzelkomponenten zu bestimmen.

Stand der Technik ist es, zum Absputtern Ionen von Edelgasen, Cäsium oder $O_2$ zu verwenden.

Unabhängig von der eigentlichen Abtragung nimmt eine oberflächenempfindliche Meßsonde die Konzentration der interessierenden Komponenten in der jeweils freigelegten Oberfläche auf. Damit ergibt sich zu jeder Abtragtiefe z eine bestimmte Konzentration $c = f(z)$ der interessierenden Komponenten. Die Abtragtiefe z kann wiederum aus der Strahlintensität, d.h. der Flächendichte j des Ionenstrahls, berechnet und durch ein zusätzliches Verfahren, nämlich der mechanischen Bestimmung der Tiefe des Abbaukraters, bestimmt werden, wobei Wiederholbarkeit und Eindeutigkeit der Bestimmung der Abtragtiefe empirisch bestimmt worden sind.

Meßsonden, die für das Verfahren geeignet sind, sind ebenfalls bekannt. Derartigen Meßsonden liegen Meßverfahren zugrunde, die die Oberflächenkonzentration einer oder mehrerer Komponenten mit hinreichender Empfindlichkeit bestimmen. Es eignen sich hierzu beispielsweise Augerelektronen-Spektroskopie, die Photoelektronen-Spektroskopie und insbesondere die verschiedenen Verfahren der Oberflächen-Massenspektrometrie. Dabei soll die Meßsonde jeweils so weit wie möglich nur die oberste Atomlage erfassen. Dann ist die Tiefenauflösung nur noch durch die Gleichmäßigkeit des Abtrags, entsprechend dem Ionenbeschuß, in ihrer Genauigkeit begrenzt. Die Gleichmäßigkeit der Festkörperabtragung durch einen dazu verwendeten Ionenstrahl bestimmt daher die erreichbare Tiefenauflösung f(z) des Gesamtverfahrens, wenn die Informationstiefe der Meßsonde als festliegende Größe vorausgesetzt wird.

Beim Ionenbeschuß der Oberfläche findet allerdings nicht nur ein Abtrag von Oberflächenteilchen statt, sondern auch eine für die Genauigkeit der Tiefenprofilanalyse schädliche Durchmischung oberflächennaher Bereiche, in die der Ionenstrahl mit einer gewissen Wahrscheinlichkeit noch eindringt. Wenn angenommen wird, daß eine geschlossene Atomlage eines Fremdelementes in einer bestimmten Tiefe $z_1$ in den Festkörper eingebaut ist, so entspricht die ursprüngliche, wahre Tiefenverteilung einem Rechteck im Konzentrations-Diagramm

$$c = f(z).$$

Durch die Wirkung (Energie- und Impulsübertragung) des in den Oberflächenbereich eindringenden Ionenstrahls findet aber bereits vor Freilegen der Fremdelementen-Schicht eine Durchmischung statt, die zu einer Verbreiterung des tatsächlich von der Meßsonde bestimmten Tiefenprofils führt. Die Auflösung des Tiefenprofils ist daher inhärent begrenzt; die Minimalisierung dieses Durchmischungseffektes ist daher ein Ziel der Erfindung.

Dabei kann vorausgesetzt werden, daß die Durchmischung oberflächennaher Bereiche durch den abtragenden Ionenstrahl von dessen Auftreffwinkel θ, der Ionenenergie E sowie der Masse m der Beschußteilchen bestimmt wird. Grundsätzlich gilt dabei, daß die Durchmischung umso geringer ist, je kleiner die Energie der Beschußteilchen beim Eindringen in den obersten Schichten des Festkörpers ist. Bei niedrigen Energien E ist sowohl die Eindringtiefe der Beschußteilchen kleiner als auch die längs dieser Eindringtiefe an den Festkörper bei Stößen mit dessen Atomen abgegebene Energie. Außer durch eine niedrige Beschußenergie E kann durch Verminderung des Auftreffwinkels e und eine Erhöhung der Masse m der Beschußionen der Mischungseffekt verringert werden.

Es ist daher bekannt, Tiefenprofilanalysen über Abbauprozesse mit Ionen durchzuführen, bei denen letztere möglichst niedrige Energie und eine möglichst große Masse haben, die auf die abzubauende Fläche möglichst flach auftrifft. Arbeitet man, wie häufig angewandt, mit $Ar^+$-Ionen von einer Energie E = 1 keV, so wird ein Auftreffwinkel θ = 70° gewählt, um eine günstige Parameter-Konstellation zu erreichen.

Allerdings stößt eine weitere Verringerung der Beschußenergie E auf Schwierigkeiten, da Ionenquellen aufgrund von Raumladungseffekten bei niedrigeren Energien sehr schlecht fokussierbar sind, was die Möglichkeit des Scannens mit einem gebündelten Strahl einschränkt. Außerdem werden nur noch niedrige Ionen-Stromdichten geliefert, also für die Zerstäubung zur Verfügung stehende Energien pro Flächen- und Zeiteinheit, wodurch die Meßzeiten für eine bestimmte Tiefe z unvertretbar verlängert werden.

Es stellt sich daher die Aufgabe, die Nachteile zu beseitigen und die Tiefenauflösung bei relativ kurzen Meßzeiten wesentlich zu verbessern.

Diese Aufgabe wird gelöst durch ein Verfahren der eingangs genannten Art, das dadurch gekennzeichnet ist, daß der Ionenstrahl einen wesentlichen Anteil von Ionen mit einem Molekulargewicht größer als 32 und bestehend aus wenigstens 3 Atomen enthält, welche Ionen bei Auftreffen auf die Substratoberfläche in wenigstens zwei Komponenten zerfallen, wobei die Auftreffenergie der Einzelatome bzw. Molekülbruchstücke zum definierten Entfernen der Oberflächenschicht ausreichend ist, und die Wechselwirkung der Beschußteilchen mit dem Festkörper nicht zu einem Schichtaufbau führt.

Es werden also zum Oberflächenabbau anstelle atomarer Ionen solche verwendet, die aus vielen, mindestens aber drei Atomen bestehen, wobei die Ionen einfach oder mehrfach geladen sein können. Diese mehratomigen Ionen "zerplatzen" beim Aufprall auf die abzutragende Festkörperoberfläche. Sie prallen als Einzelatome mit näherungsweise der gleichen Geschwindigkeit, die das Molekülion ursprünglich besaß, auf die Oberfläche auf. Die Einzelionen haben aber eine im Vergleich zum Molekülion geringere Masse und damit eine entsprechend niedrigere kinetische Energie. Damit sind ihre Eindringtiefe und die bei Einzelstößen im Festkörper abgegebene Energie entsprechend gering. Damit wird auch die Schichtdurchmischung beim Eindringen in den Festkörper herabgesetzt.

Um die freiliegende Oberflächenkonzentration zu bestimmen, existieren zwei Methoden: Einmal können im Strom der vom Sputter-Ionenstrahl selbst ausgelöste Sekundärteilchen, das heißt Ionen oder Neutralteilchen, zum Beispiel durch Laser-Nachionisierung, analysiert werden; vorzugsweise wird jedoch an der jeweils freiliegenden Oberfläche mittels einer geeigneten Zusatzsonde ein zweiter zu analysierender Ionenstrahl erzeugt.

Beschußionen, die aus mindestens 3 Atomen bestehen, können grundsätzlich durch Elektronenstoßionisation von Gasmolekülen erzeugt werden. Aus der Mannigfaltigkeit derartiger Ionen kann als Beispiel das bei der Elektronenstoßionisation von $SF_6$ dominierend entstehende Ion $SF_5^+$ verwendet werden. Zwar werden diese Gase bzw. Ionen auch großtechnisch genutzt; es wurde aber nicht erkannt, daß bei einer Anwendung gemäß Erfindung eine drastische Verbesserung der Tiefenauflösung möglich ist. Grundsätzlich. gibt es mehrere tausend anderer Moleküle, die entsprechend ionisierbar sind. Mit den hier gewählten Molekül-Ionen ergibt sich eine wesentliche Verbesserung von Tiefenauflösungen, wenn zur Tiefenauflösung ein Sekundärionen-Massenspektrometer genutzt wird.

Die Erfindung wird anhand von Figuren und Beispielen im folgenden erläutert. Die Figuren zeigen:

Figur 1 in schematischer Darstellung eine Versuchs- und Meßanordnung, die bei dem erfindungsgemäßen Verfahren verwendet wird;

Figur 2 in schematischer Darstellung die der Erfindung zugrundeliegenden Prinzipien;

Figur 3 ein Tiefenprofil gemessen für implantierte B-Atome;

Figuren 4 und 5 Tiefenprofile gemessen an Ga-As-Materialien.

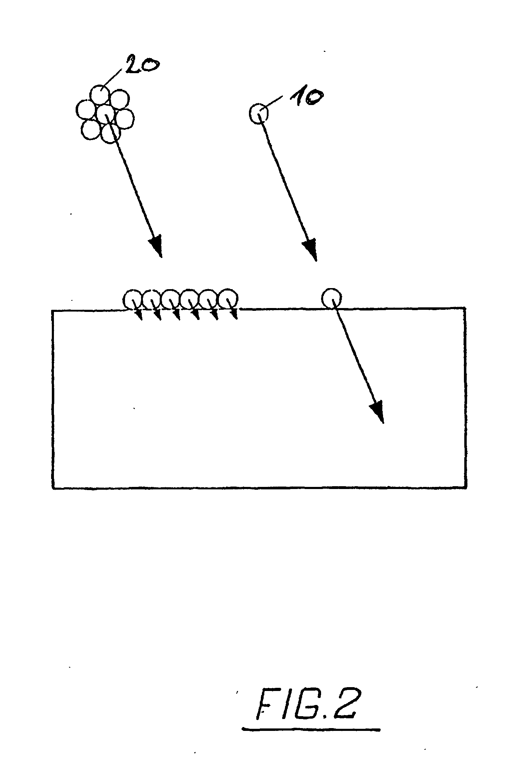

Figur 2 zeigt eine schematische Darstellung des der Erfindung zugrundeliegenden Prinzips. Wird einmal ein einatomiges Ion 10 der Masse M als Beschußion betrachtet, so steht demgegenüber ein molekulares Ion 20 der gleichen Masse M, das sich aus n (hier n = 7) Einzelatomen zusammensetzt. Beide Ionen sollen eine Elementarladung $e_o$ tragen und das gleiche Beschleunigungspotential U durchlaufen haben, d.h., die gleiche kinetische Energie $e_o \cdot U$ beim Aufprall besitzen. Dann ergibt sich die Situation gemäß der Figur 2.

Das nur aus einem Atom der Masse M bestehende Ion 10 dringt mit der vollen Energie

$$E_o = e_o \cdot U$$

in die Oberfläche ein. Es wird eine dieser Energie entsprechende große Eindringtiefe z besitzen, große Energiebeträge auf die Festkörperatome übertragen und zu einer entsprechend starken Schichtdurchmischung und daher Verschlechterung des Tiefenprofils führen.

Bei einem aus n = 7 Teilchen bestehenden Molekularion 20 gleicher Energie $e_o U$ wird zu einer völlig anderen Energieübertragung führen. Hier wird im Moment des Aufpralls auf die Oberfläche das Teilchen in 6 Teilchen der Masse $m_1$, $m_2$, ... $m_6$ zerfallen. Die Gesamtenergie $e_o \cdot U$ wird sich dabei auf diese Teilchen verteilen. Die kinetische Energie des Atoms i ergibt sich aufgrund der Tatsache, daß alle n Atome im Moment des Auftreffens die gleiche Geschwindigkeit besitzen:

Durch die Verwendung geeigneter molekularer Ionen, bei denen die Energie zwischen 100eV und einigen 1000 eV liegen sollte, ergeben sich damit Einzelatome bzw. Molekülbruchstücke, die eine hinreichend hohe Energie haben und die auch als komplettes Molekülion durch die infrage kommenden Ionenoptiken transportiert und fokussiert werden können.

Gleichzeitig aber wird erreicht, daß nur ein Bruchteil $(m_i/M)$ dieser Ionenenergie als Aufschlagenergie der den Oberflächenabbau verursachenden Atome bzw. Molekülbruchstücke wirksam wird. Eindringtiefe und Energieübertragung sind entsprechend gering. Das Tiefenauflösungsvermögen wird vergrößert, da die Durchmischungseffekte verringert sind.

Beispielsweise kann der Ionenstrom durch Elektronenstoß-Ionisation von $SF_6$-Molekülen erzeugt werden. Etwa 75% der dabei entstehenden Ionen sind $SF_5^+$-Ionen Sie zerfallen beim Aufprall in einzelne Atome mit entsprechend niedrigeren Energien.

Die Erfindung soll an Beispielen erläutert werden.

**Beispiel 1**

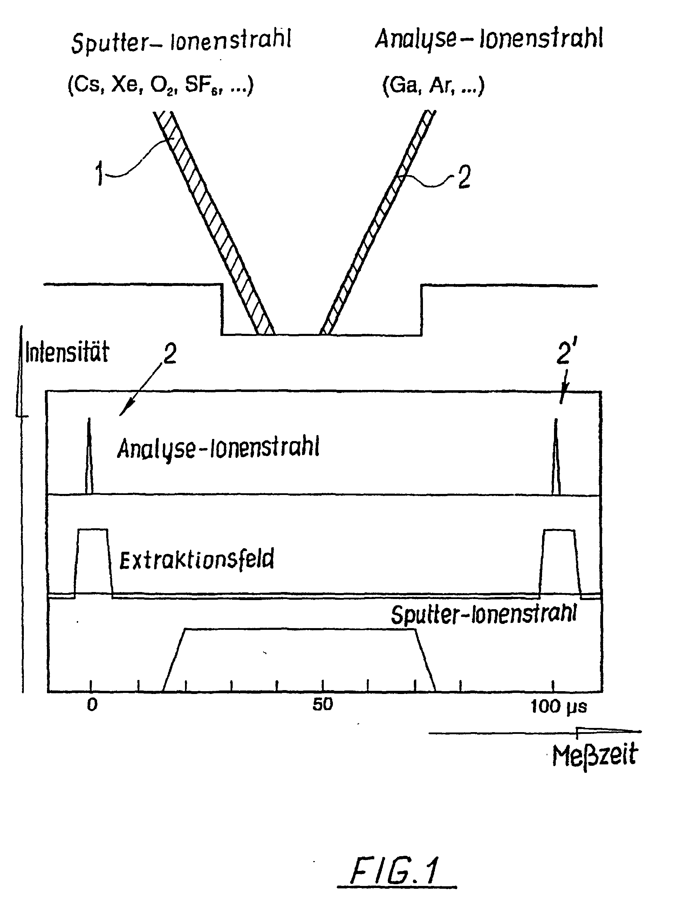

Gearbeitet wird mit dem Dual-Strahl-Verfahren nach dem TOF-SIMS (TOF-SIMS = Time-of-Flight-Sekundärionen-Massenspektroskopie)-Verfahren. Figur 1 zeigt ein Schema dieser Meßmethode. Es wird eine Ionenquelle für den Sputter-Ionenstrahl und eine Ionenquelle für den Analysestrahl eingesetzt. Beide Ionenstrahl-"guns" arbeiten mit derselben Repetitionsrate. Der Oberflächenabbau erfolgte mit einem gepulsten fokussierten Ionenstrahl ($Ar^+$ oder $SF_5^+$), der über eine Fläche vom 200 µm · 200 µm gerastert wurde. Als analytische Sonde diente ein zusätzlicher unabhängiger und ebenfalls gepulster fokussierter $Ar^+$-Primärionenstrahl, der die Oberfläche in der Mitte des erzeugten Beschußkraters traf. Der Sputterionenstrahl 1 ist zwischen zwei Einschaltzyklen des Analyse-Ionenstrahls 2,2' eingeschaltet, während das Extraktionsfeld zwischen den beiden Einschaltzeiten der Analyse-Ionenstrahlen ausgeschaltet ist. Auf diese Weise kann, wie an sich bekannt, die Flugzeit (time of flight) der vom Analayse-Ionenstrahl erzeugten Sekundärionen zu deren Analyse verwendet werden.

Um den Einfluß der Sputter-Parameter auf die Auflösung von Tiefenprofilen festzustellen, wurde eine Si-Probe verwendet, die durch Philips-Research, Eindhoven, präpariert worden war. Festgestellt werden sollte der Einfluß der Parameter Ionenart, Ionenenergie und Einfallswinkel.

Bei der angegebenen Probe wurden mit 100 eV Bor-Ionen in das native Oxid eines Silizium-Wafer implantiert und dann durch eine amorphe $SiO_2$-Schicht abgedeckt. Die Implantationsdosis war auf $1.6 \cdot 10^{14}/cm^2$ eingestellt. Durch TOF-SIMS-Messungen der vorbeschriebenen Art mit einem
Cameca IMS 4f-magnetischem Sektorfeld-Instrument und sogenannten crater-profiling wurden für die Konzentration der Bor-Atome ein Maximum in einer Tiefe von 17,3 nm gefunden.

Diese Probe wurde mit verschiedenen Sputter-Ionen-Arten, Ionenenergien und Einfallswinkeln gemessen. Durch Winkelverstellung der Probe konnte eine Winkelvariation von 21° ohne signifikante Transmissionsverluste realisiert werden. Während aller Messungen wurde die Probe mit Sauerstoff geflutet, wobei sich eine $Si^+$-Sekundärionenausbeute so hoch wie in $SiO_2$ ergab.

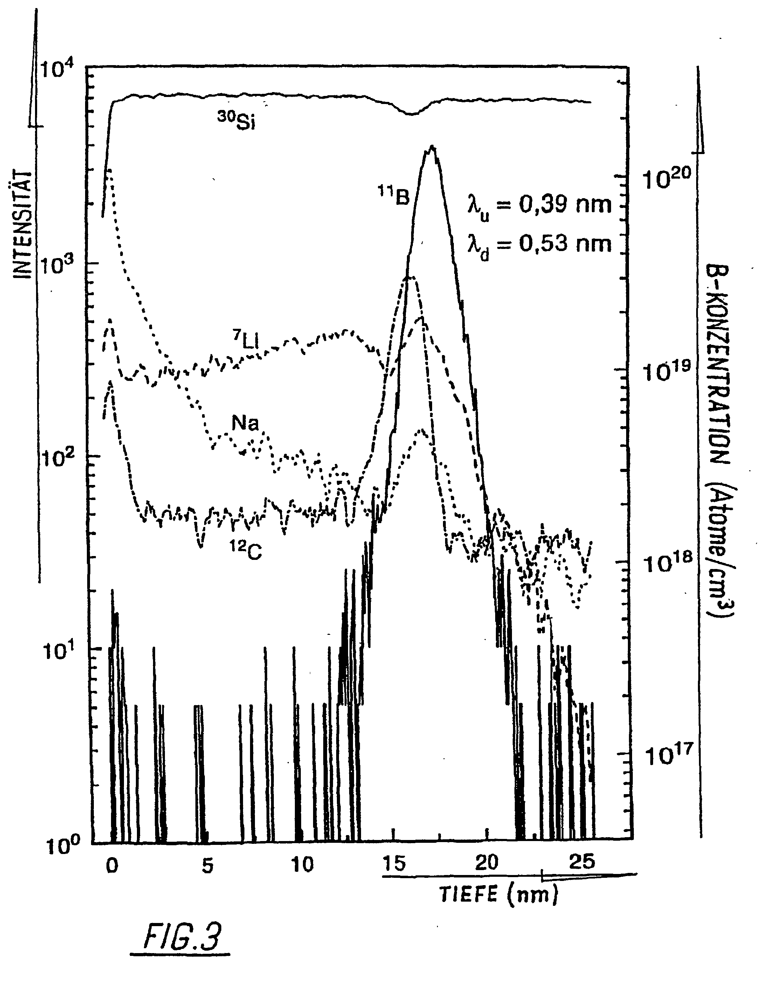

Die ermittelten Atomkonzentrationen sind in Figur 3 dargestellt. Fig. 3 zeigt ein TOF-SIMS-Tiefenprofil, das mit 600 eV $SF_6$-Ionen-Sputtering bei einem Einfallswinkel von 52,5° erzielt wurde. Die Tiefe von 30 nm wurde nach 50 min Sputterzeit erreicht. Aus der bekannten Bor-Implantationsdosis konnte eine Konzentrationsskala abgeleitet werden, die eine Nachweisgrenze für Bor von $5 \cdot 10^{16}$ Atome/$cm^3$ zeigte. Die Breite der Übergangsregion, in der das Sputter-Gleichgewicht nicht erreicht worden ist, ist sehr klein. Das $Si^+$-Signal (Isotop der Masse 30) stabilisiert sich schon bei einer Tiefe von 0,8 nm.

Die ursprüngliche Wafer-Oberfläche, in die 100 eV Bor-Atome implantiert worden sind, wird durch ein Maximum eines Alkali-Signals und des Kohlenstoff-Signals markiert. Entsprechend diesen Kontaminationen zeigt das $^{30}Si^+$-Signal ein Minimum für Atomgewicht 30.

Bei einem Vergleich der Ergebnisse, die mit $O_2^+$- oder $SF_5^+$-Ionenteilchen erreicht wurden, zeigt sich, daß wesentlich bessere Werte mit $SF_5^+$ erreicht

werden. Bei einem molekularen Ion, wie $SF_5^+$, trägt das Schwefelatom 25% (150 eV) und tragen die Fluor-Atome nur 19% (90 eV) der Strahlenergie von 600eV. Dies erklärt, daß eine gute Tiefenauflösung bei Molekular-Sputterung erzielt wird, wenn mit Ionenteilchen gearbeitet wird, die mit einem größeren Molekulargewicht aus wenigstens 3 Atomen bestehen.

## Beispiel 2

Sputtern mit $SF_6$ ergibt auch eine hohe Tiefenauflösung für Aluminium-Atome in AlGaAs-Vielschichtaufbauten.

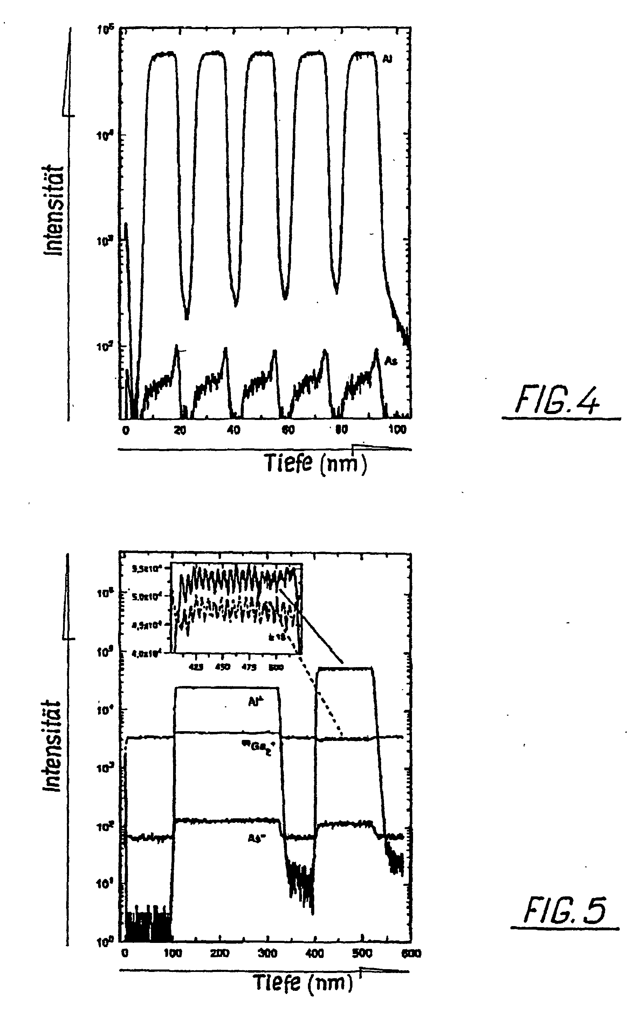

Fig. 4 zeigt ein Tiefenprofil, das mit 600 eV $SF_6$-Sputtering an einem AlAs/GaAs-Multischicht-Systems erzielt worden ist [(6,7 mm GaAs/5 x (9,9 nm AlAs/8,8 nm GaAs)/GaAs-Substrate]. Hohe Tiefenauflösung wird demonstriert durch das Aluminium-Signal, das permanent in der GaAs-Schicht über zwei Dekaden mit großer Steilheit als Folge des molekularen niederenergetischen Sputterings abnimmt, so daß die zu erwartenden Schichtfolgen sich genau abheben.

## Beispiel 3

Ein Tiefenprofile für eine andere Multischicht, nämlich ein AlGaAs/GaAs-System [105 nm GaAs/215 nm AlAs/85 nm GaAs/19 x (3 nm AlGaAs/3 nm GaAs)/GaAs-Substrat] zeigt Fig. 5. Hier wurde mit 1 keV $SF_6$-Sputtering gearbeitet. Eine hohe Tiefenauflösung bis zu einer Tiefe von wenigstens 500 nm konnte in einer Zeit von 65 Minuten erreicht werden. Die Tiefenauflösung reicht aus, um die 3 nm-Aluminium-Schichtfolgen in einer Tiefe von 405 bis 520 nm zu separieren. Die Amplitude der Signal-Oszillation ist begrenzt durch die Probenqualität, da die Aluminium-Schichten selbst nicht scharf sind.

Während einer Tiefenprofilanalyse sind demnach zwei Funktionen zu erfüllen:

1. Der möglichst gleichmäßige Abbau von Oberflächenschichten mithilfe molekularer Ionen, was Gegenstand der Erfindung ist.
2. Die praktisch gleichzeitige Bestimmung der momentanen Zusammensetzung, möglichst im Bereich der obersten Atomlage. Hierbei kann, wie bereits erläutert, im Einstrahl- oder Dual-Beam-Verfahren gearbeitet werden.

## Patentansprüche

1. Verfahren, bei dem eine Feststellung von Tiefenprofilen im Dünnschichtbereich fester Substrate erfolgt, mit folgenden Verfahrensschritten:

   - Erzeugen eines Ionenstrahls (1) aus einer Ausgangssubstanz, die sich in der Gasphase befindet oder in die Dampfphase überführt wird;
   - Lenken des Ionenstrahls auf die Substratoberfläche,
   - definiertes Entfernen von Oberflächenschichten durch einen Ionenstrahl-Sputterprozeß mit diesem Ionenstrahl,
   - Bestimmung der Konzentration der gesputterten, aus der Substratoberfläche entfernten Komponenten mittels einer vom Ionenstrahl unabhängigen Meßsonde (2) mit einem nachgeschalteten Meß- und Auswertekreis,

   **dadurch gekennzeichnet, daß**
   der Ionenstrahl (1) einen wesentlichen Anteil von Ionen mit einem Molekulargewicht größer als 32 und bestehend aus wenigstens 3 Atomen enthält, welche Ionen bei Auftreffen auf die Substratoberfläche in wenigstens zwei Komponenten zerfallen, wobei die Auftreffenergie der Einzelatome bzw. Molekülbruchstücke zum definierten Entfernen der Oberflächenschicht ausreichend ist, und die Wechselwirkung der Beschußteilchen mit dem Festkörper nicht zu einem Schichtaufbau führt.

2. Verfahren nach Anspruch 1, **dadurch gekennzeichnet, daß** die Einzelatome bzw. Molekülbruchstücke eine Energie besitzen, die zwischen 100 eV und 3000 eV liegt.

3. Verfahren nach Anspruch 1 oder 2, **dadurch gekennzeichnet, daß** der Ionenstrom einen wesentlichen Anteil an $SF_5^+$-Ionen enthält, die bei Aufprall auf die Substratoberfläche in Einzelatome zerfallen.

## Claims

1. A method wherein depth contours in the thin layer region of solid substrates are determined in the following steps:

   - generating an ion beam (1) from a starting substance which is in the gas phase or converted to the vapour phase;

   - directing the ion beam on to the substrate surface;

   - defined removal of surface layers by an ion beam sputtering process using the said ion beam, and

   - determining the concentration of sputtered components removed from the substrate surface, using a measuring probe independent of the ion beam and with a downstream measuring and evaluating circuit, **characterised in**

**that** the ion beam (1) contains a substantial proportion of ions having a molecular weight greater than 32 and comprising at least three atoms, and when the ions strike the substrate surface they disintegrate into at least three components, wherein the impact energy of the individual atoms or molecular fragments is sufficient for defined removal of the surface layer, and the interaction between the bombarding particles and the solid does not result in formation of a layer.

2. A method according to claim 1, **characterised in that** the individual atoms or molecular fragments have an energy between 100 eV and 3000 eV.

3. A method according to claim 1 or 2, **characterised in that** the ion beam contains a substantial proportion of $SF_5^+$ ions which break up into individual atoms on striking the substrate surface.

**Revendications**

1. Procédé dans lequel une détermination de profils en profondeur est effectuée dans la zone de couche mince de substrats solides, qui comprend les étapes consistant à :

    engendrer un faisceau ionique (1) à partir d'une substance de départ qui se trouve en phase gazeuse ou est transformée en une phase vapeur,

    diriger le substrat ionique sur la surface du substrat,

    exécuter au moyen de ce faisceau ionique un enlèvement défini de couches superficielles par un processus de pulvérisation cathodique par faisceau ionique,

    déterminer la concentration des composants enlevés de la surface du substrat par pulvérisation cathodique, au moyen d'une sonde de mesure (2) indépendante du faisceau ionique en aval de laquelle est connecté un circuit de mesures et d'évaluation, **caractérisé en ce que**

    le faisceau ionique (1) contient une fraction importante d'ions à poids moléculaire supérieur à 32 et composés d'au moins 3 atomes, ions qui se décomposent en au moins deux composants lors de leurs impacts sur la surface du substrat, l'énergie d'impact des atomes individuels ou des fragments moléculaires étant suffisante pour l'enlèvement défini de la couche superficielle, et l'effet d'échange des particules de bombardement avec le corps solide ne conduisant pas à une constitution de couches.

2. Procédé selon la revendication 1, **caractérisé en ce que** les atomes individuels ou les fragments moléculaires possèdent une énergie qui est comprise entre 100 eV et 3000 eV.

3. Procédé selon la revendication 1 ou 2, **caractérisé en ce que** le courant ionique contient une fraction sensible d'ions $SF_5^+$ qui se décomposent en atomes individuels lors de leurs collisions sur la surface du substrat.

*FIG.1*

FIG.2

_FIG.3_

*FIG.4*

*FIG.5*